# EUROPEAN PATENT SPECIFICATION

(11) **EP 0 674 120 B1**
(45) Date of publication and mention of the grant of the patent: **21.01.1998**
(21) Application number: 95301762.1
(22) Date of filing: 16.03.1995
(51) Int. Cl.: F16F 9/43

(54) **Method and apparatus for charging dampers with pressurized gas**
Verfahren und Vorrichtung zur Gasfüllung von Dämpfer
Méthode et appareil pour le remplissage des amortisseurs à gaz

(30) Priority: 17.03.1994 US 210039
(43) Date of publication of application: 27.09.1995
(73) Proprietor: MONROE AUTO EQUIPMENT COMPANY, Monroe Michigan 48161 (US)
(72) Inventor: Jones, Gareth Mark, Parkside 5063, South Australia (AU); Jenkins, Jeffrey Alan, Bellevue Heights 5050, South Australia (AU); Shnier, Michael Julian, St Georges 5064, South Australia (AU)
(74) Representative: Price, Nigel John King

(56) References cited:
- US-A- 4 114 866
- US-A- 4 194 731
- US-A- 4 475 577
- US-A- 4 491 160
- US-A- 4 556 092

## Description

The present invention generally relates to gas pressurized hydraulic dampers, and more particularly, to a method and apparatus for charging such dampers with pressurized gas.

Gas pressurized hydraulic dampers, such as shock absorbers and struts, are well-known and have found numerous applications on road driven vehicles and most notably on automobiles and light trucks. Such gas pressurized hydraulic dampers generally have an inner pressure cylinder and outer reserve cylinder with the space therebetween forming a reserve chamber which is used to store a pressurized gas such as nitrogen. The pressurized gas which is located within the reserve chamber is used for improving ride comfort and road holding ability.

Several methods have been developed for introducing the pressurized gas into the reserve chamber of the damper during manufacture. In this regard, US-A-4,564,138, the disclosure of which is expressly incorporated by reference, discloses a method for charging a shock absorber with pressurized gas. The method involves forming a hole in the reserve chamber of the shock absorber cylinder after completing assembly of the shock absorber. Pressurized gas is allowed to flow through the hole and into the shock absorber. The hole is then sealed by placing a metal ball over the hole and welding the ball to the cylinder.

Other methods, such as those disclosed in US-A-4,491,160 and 4,131,139, provide for charging a shock absorber with pressurized gas by forming a locally reduced cross-sectional area on the piston rod. The reduced cross-sectional area is aligned with the seal to create a passage for pressurized gas into the shock absorber. Once the pressure of the gas within the shock absorber has reached the desired level, the rod is displaced axially relative to the seal so that the full cross-sectional area of the piston rod engages the seal so as to retain the gas within the shock absorber.

A further method for charging a damper with pressurized gas is disclosed in US-A-4,044,866. The method disclosed in this reference also incorporates use of a reduced cross-sectional area formed on the piston rod which is able to be aligned with a seal to form a passage for charging the damper with pressurized gas. After the damper is charged, the seal is displaced to prevent reformation of the passage during use and thus leaking of the gas from the damper.

Another method of charging a damper with gas is disclosed in US-A-4,114,866. The method disclosed in this reference involves axially displacing the seal away from an upper portion of the cylinder assembly of the damper and against the resistance of a retaining spring. Pressurized gas is then passed between the displaced seal and the cylinder. Once the desired level of pressure is obtained, the force displacing the seal is released, and the seal moves into contact with the cylinder assembly under urging of the retaining spring thus sealinq the gas within the damper.

The document US-A-4 194 731 discloses an apparatus for charging a damper with pressurized gas, said damper including a housing, a rod extending from said housing, a seal disposed between said housing and said rod, and means for delivering a pressurized gas to a flow passage.

Still another method of charging a damper with gas is commonly known as auto-nibbing. Auto-nibbing involves inserting a nib between the piston rod seal and the piston rod and injecting pressurized gas therethrough into the shock absorber.

While these methods are effective, they also suffered from several disadvantages. For example, methods involving the use of a piston rod with a reduced cross-sectional generally require additional processing to form the reduced cross-sectional area on the piston rod. In addition, the piston rod must be precisely aligned with the seal to form the passage for the gas during the charging operation. Furthermore, some provision must be made for preventing the piston rod from realigning with the seal and thus allowing the gas to leak from the shock.

There are also disadvantages with respect to those methods which involve axially displacing a seal against the resistance of a retaining spring. In this regard, this method has the disadvantage of requiring the use of a complex seal assembly as well as the retaining spring.

According to one aspect of the present invention there is provided apparatus for charging a damper with pressurized gas, said damper including a housing, a rod extending from said housing, and a seal disposed between said housing and said rod, said apparatus comprising:
means for squeezing said seal so as to distort it to form at least one flow passage for said pressurized gas to flow between said seal and said rod; and
means for delivering said pressurized gas to said at least one flow passage.

According to a further aspect of the present invention there is provided apparatus for charging a damper with pressurized gas, said damper having a housing and a piston rod extending from said housing, said piston rod being sealed with respect to the housing by a seal, said apparatus comprising:
a gas delivery chamber sealingly engagable with said housing of said damper adjacent the piston rod;
characterised in that said apparatus further comprises:
a distortion clamp for external application to said damper to squeeze and thereby to temporarily distort said seal to allow pressurized gas to enter said damper through the temporary distortion formed in said seal.

According to a yet further aspect of the present invention there is provided a method for charging a damper with pressurized gas, said damper comprising a housing, a rod extending from said housing and a seal disposed between the housing and the rod, said method comprising:
distorting said seal to form at least one first flow passage; and
delivering pressurized gas to said at least one first flow passage thereby to charge said damper with said pressurized gas;
characterised in that said seal is distorted by temporarily squeezing said seal externally of the damper.

In the hereinafter described and illustrated embodiment of an apparatus in accordance with the present invention a passage between the dust lip of the oil seal and the piston rod is formed by locally deforming the dust lip under the action of a distortion clamp. A source of pressurized gas is then placed in communication with the passage. The pressurized gas causes the remainder of the oil seal to be displaced from the piston rod thereby allowing gas to enter the damper between the seal and the piston rod. When the pressure of gas within the damper has attained the desired level, the distortion clamp is released thereby allowing the dust lip to return to normal circumferential contact with the piston rod, and then the source of pressurized gas is removed. A valve member is integrally formed with the oil seal which is used for preventing the pressurized gas from leaking from the damper once the gas enters the cylinder.

The above stated advantages and features of the present invention will be more fully understood and appreciated by those skilled in the art by studying the following detailed description of a preferred embodiment and the accompanying drawings in which:
FIG. 1 is an elevational view of a typical damper which is able to be charged with pressurized gas by using the apparatus according to the teachings of the preferred embodiment of the present invention;
FIG. 2 is a longitudinal partial cross-sectional view of a top portion of a damper illustrated in FIG. 1 and shown in operative association with the apparatus for charging a damper with pressurized gas according to the teachings of the preferred embodiment of the present invention;
FIG. 3 is a sectional view taken along line 3-3 of FIG. 2 illustrating the distortion clamp and the flow passages formed according to the teachings of the preferred embodiment of the present invention;
FIG. 4A is an enlarged sectional view illustrating the closure of the first and second flow passages upon completion of the gas charging for retaining the pressurized gas within the damper according with the teachings of the preferred embodiment of the present invention; and
FIG. 4B is an enlarged sectional view illustrating the first and second gas flow passages for charging the damper with gas while pressurized gas is being communicated thereto according to the teachings of the preferred embodiment of the present invention.

The following discussion of the preferred embodiment of the present invention is merely exemplary in nature. Accordingly, this discussion in no way is intended to limit the scope of the invention, the application of the invention or the use of the invention.

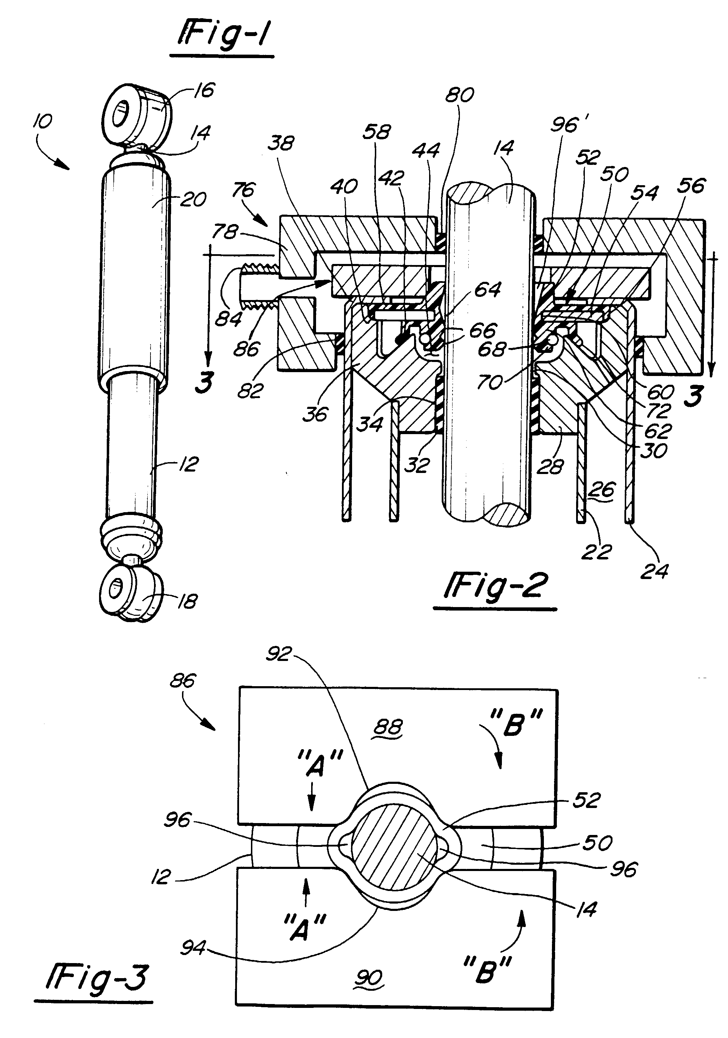

Referring to FIG. 1, a damper 10 is shown which is able to be charged with pressurized gas according to the preferred embodiment of the present invention. The damper 10 may be of the type commonly used on automotive vehicles and includes a cylindrical housing 12 within which a piston (not shown) is disposed. As will be appreciated by those skilled in the art, the piston is used to generate damping forces by controlling the flow of hydraulic fluid between the upper and lower working chamber of the damper 10. The piston mechanically communicates with a piston rod 14 which is used to deliver the damping forces generated by the piston to the body of an automotive vehicle.

The damper 10 includes an upper and lower mounting member 16 and 18 which are provided for securing the damper 10 to the frame and suspension of an automobile respectively. The damper 10 also includes a dust shield 20 which is secured to the upper mounting member 16. The dust shield 20 is used for reducing the amount of dirt and contamination which contacts the exposed portion of the piston rod 14 above the housing 12.

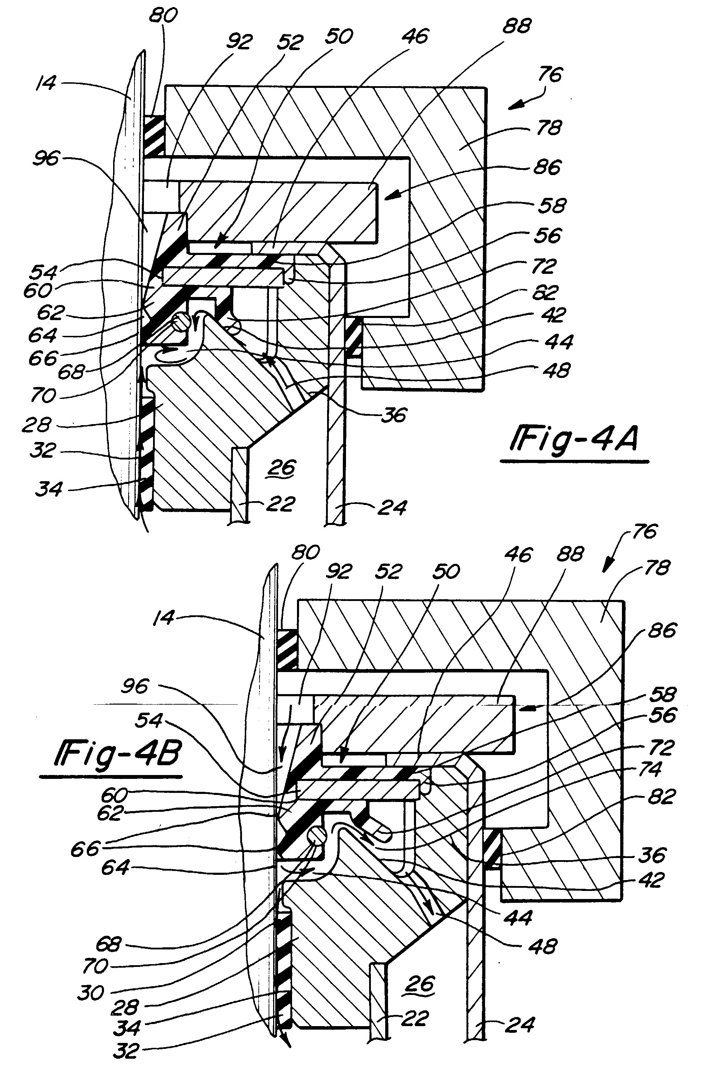

The internal components of the damper 10 will now be described with reference to FIG 2. In this regard, the cylindrical housing 12 is shown to include concentrically located inner pressure cylinder 22 and an outer reserve cylinder 24 respectively. The inner pressure cylinder 22 is used to store hydraulic fluid which is used to provide the desired damping characteristics, while the reserve cylinder 24 is used to define with the pressure cylinder 22 a reserve chamber 26 for receiving pressurized gas and reserve oil volume. A rod guide 28 sealingly engages the upper end of the pressure cylinder 22 and includes a central opening 30 through which the piston rod 14 extends. A rod bearing 32 is also provided and is disposed in a recessed portion 34 of the central opening 30 of the rod guide 28 and provides bearing support for the reciprocating rod.

The rod guide 28 further includes an outwardly extending portion 36 which engages the reserve cylinder 24. The outwardly extending portion 36 is operable to maintain a substantially concentric alignment of the pressure cylinder 22 with respect to the reserve cylinder 24. The upper portion of the rod guide 28 is formed with a seal seat 40, a valve seat 42 and a central chamber 44. A flange portion 46, as shown in FIG 4A, of reserve cylinder 24 retains the rod guide 28 in position between the pressure cylinder 22 and the reserve cylinder 24. The seal seat 40 and the valve seal 42 are used to engage an oil seal which is described below, while the central chamber 44 is used to provide a portion of a flow passage for pressurized gas to flow into the reserve chamber 26. The rod guide 28 also includes passage 48 for allowing gas and oil to flow through the rod guide 28 and into the reserve chamber 26 in a manner now fully described below.

The damper 10 also includes an oil seal 50 which is used for preventing hydraulic fluid and pressurized gas located within the damper 10 from leaking to the exterior of the damper 10. The oil seal 50 is retained against seal seat 40 by the flange portion 46 of the reserve cylinder 24. The oil seal 50 includes a dust lip 52 which is used for preventing dust from entering the damper 10. In addition, the oil seal 50 includes a washer shaped support member 54 which is retained between a lip portion 56 of an outwardly extending flange 58 and a groove 60 formed in the central portion 62 of the oil seal 50. The central portion 62 of the oil seal 50 includes an opening 64 through which the piston rod 14 extends. The opening 64 is formed with a plurality of seal lips 66 for engaging the piston rod 14 and for preventing hydraulic fluid and pressurized gas from leaking from the damper 10. A circular spring member 68 is also provided and is seated in a groove 70 formed in the central portion 62. The spring member 68 is used for maintaining the seal lips 66 of the oil seal 50 in contact with the piston rod 14 under normal operating conditions.

To provide means for charging the damper 10 with pressurized gas, a gassing apparatus 76 is provided. The gassing apparatus 76 is operable to receive the upper portion of the damper 10 before the dust shield 20 is attached and is able to deliver pressurized gas to the region of the damper 10 adjacent to the dust lip 52. The gassing apparatus 76 includes the gas delivery chamber 78 which has a plurality of seals 80 and 82 for sealing the gas delivery chamber 78 to the piston rod 14 and the cylindrical housing 12, respectively. In addition, the gassing apparatus 76 also includes a fitting 84 which is used for connecting the gas delivery chamber 78 to a source of pressurized gas (not shown).

To provide means for forming a first flow passage for pressurized gas, the gassing apparatus 76 further includes a distortion clamp 86 which is operable to engage the dust lip 52 of the oil seal 50. The distortion clamp 86 includes first jaw member 88 and a second jaw member 90. The first and second jaw members 88 and 90 each have central arcuate recesses 92 and 94, respectively, which are of approximately the same radius as the piston rod 14. The first and second jaw members 88 and 90 are operable to be positioned around the piston rod 14 with the arcuate recesses 92 and 94 located adjacent the dust lip 52 of the oil seal 50. As will be appreciated by those skilled in the art, suitable clamping means (not shown) may be used to urge the first and second members 88 and 90 together in a closing motion about the dust lip 52 and piston rod 14. Upon closing of the first and second jaw members 88 and 90, the arcuate recesses 92 and 94 engage the dust lip 52 and cause the dust lip 52 to distort to thereby form a first flow passage 96 for pressurized gas.

The method according to the present invention will now be described. The upper portion of the damper 10 is initially received within the gassing apparatus 76. The first and second jaw members 88 and 90 of the distortion clamp are then closed about the dust lip 52 so as to form the first flow passage 96. With the first and seoond jaw members 88 and 90 closed about the dust lip 52, pressurized gas is delivered to the gas delivery chamber 78. The seals 80 and 82 maintain the pressurized gas about the top portion of damper 10. The pressurized gas entering the gas delivery chamber 78 is delivered to the first flow passage 96 causing the pressure of the gas acting on the oil seal lips 66 to increase. The oil seal lips 66, under force of the pressurized gas, are then radially displaced from the piston rod 14 so as to cause pressurized gas to flow between the oil seal lips 66 and the piston rod 14 and to enter the central chamber 44. From the central chamber 44, the pressurized gas causes the valve member 72 to be displaced from the valve seat 42 so as to allow pressurized gas to flow through a second flow passage 74 and into the reserve chamber 26 as shown in FIG. 4B. Pressurized gas can also flow between rod bearing 32 and rod 14 into the pressure cylinder 22.

Once the pressurized gas is delivered into the central chamber 44 and the pressure in the central chamber 44 and the delivery chamber 78 equalize the seal lips 66 close and seal against rod 14. The delivery chamber 78 is then depressurized and the seal lips 66 seal against the rod 14 preventing pressurized gas from escaping from chamber 10, as shown in FIG 4A. After charging of the damper 10 is completed, the first and second jaw members 88 and 90 are moved out of engagement with the dust lip 52 so as to allow the dust lip 52 to return to its normal condition in circumferential contact with the piston rod 14. The gassing apparatus 76 is then removed from the damper 10 and then the assembly of the damper 10 is completed.

As will be appreciated by those skilled in the art, there are a number of relative motions through which the first and second jaw members 88 and 90 may engage the dust lip 52. For example, if the first and second jaw members 88 and 90 translate linearly relative to each other as indicated by arrow "A" in FIG. 3, the result is the formation of two second flow passages 96 as shown. If, however, the first and second jaw members 88 and 90 are made to pivot in -a scissors type motion as indicated by arrows "B" in FIG. 3, the result is the formation of a single first flow passage 96' as shown in FIG. 2. Moreover, it should be understood that the distortion clamp may have more than two jaw members which may be used and moved together with the resulting formation of a plurality of first flow passages 96.

As will be appreciated by those skilled in the art, the method and apparatus of the present invention does not require precise positioning on the piston rod during charging or means for restricting the movement of the piston rod or seal after charging to prevent leakage. The present invention also eliminates the need for specially processing the piston rod to form a gas charging groove or passage. The method and apparatus of the preferred invention further possesses the advantages of requiring low capital investment and a minimum of tooling. Furthermore, the tooling is subject to a minimum of wear thereby reducing maintenance and associated process down time while enhancing process capability and control. The method may also be performed on-line during manufacture of the damper assembly with a short cycle time.

A specific embodiment of the present invention as been shown and described in detail to illustrate the principles of the present invention. The present invention may be used in conjunction with the manufacture of gas charged shock absorbers, struts or springs without departing from its fair scope, Accordingly, it will also be understood that the invention may be embodied in other forms without departing from such principles and the fair scope of the present invention.

## Claims

1. Apparatus for charging a damper (10) with pressurized gas, said damper including a housing (12), a rod (14) extending from said housing, and a seal (50) disposed between said housing and said rod, said apparatus comprising:
means (86) for squeezing said seal (50) so as to distort it to form at least one flow passage (96) for said pressurized gas to flow between said seal and said rod; and
means (76) for delivering said pressurized gas to said at least one flow passage (96).

2. Apparatus as claimed in claim 1, wherein said means (86) for squeezing said seal (50) is arranged to form a plurality of said flow passages (96) for said pressurized gas to flow between said seal (50) and said rod (14).

3. Apparatus as claimed in claim 1 or claim 2, wherein said means (76) for delivering pressurized gas to said at least one flow passage (96) is operable to sealingly engage a region of said damper (10) proximate to said seal.

4. Apparatus as claimed in any one of the preceding claims, wherein said means (86) for squeezing said seal (50) is disposed within said means (76) for delivering pressurized gas to said flow passage (96).

5. Apparatus as claimed in any one of the preceding claims, wherein said means (86) for squeezing said seal (50) is operable to compress a region of said seal so as to form said at least one flow passage (96).

6. Apparatus as claimed in any one of the preceding claims, wherein said means (86) for squeezing said seal comprises:
a first member (88) operable to engage a portion of said seal (50); and
a second member (90) operable to engage a portion of said seal (50),
said first member and second members (88,90) being relatively movable to form said at least one flow passage (96).

7. Apparatus as claimed in any one of the preceding claims, wherein said seal (50) is, in normal use of the damper, operable to retain the pressurized gas within said housing (12).

8. Apparatus for charging a damper (10) with pressurized gas, said damper having a housing (12) and a piston rod (14) extending from said housing, said piston rod being sealed with respect to the housing by a seal (50), said apparatus comprising:
a gas delivery chamber (78) sealingly engagable with said housing (12) of said damper (10) adjacent the piston rod (14);
characterised in that said apparatus further comprises:
a distortion clamp (86) for external application to said damper (10) to squeeze and thereby to temporarily distort said seal (50) to allow pressurized gas to enter said damper through the temporary distortion (96) formed in said seal.

9. Apparatus as claimed in claim 8, wherein said distortion clamp includes first and second members (88,90) disposable about said seal (50), said first and second members being relatively movable to compress a portion of said seal to form said temporary distortion (96).

10. Apparatus as claimed in claim 8 or claim 9, wherein said distortion clamp (86) is disposed within said gas delivery chamber (78).

11. A method for charging a damper (10) with pressurized gas, said damper comprising a housing (12), a piston rod (14) extending from said housing and a seal (50) disposed between the housing and the rod, said method comprising:
distorting said seal (50) to form at least one first flow passage (96); and
delivering pressurized gas to said at least one first flow passage (96) thereby to charge said damper (10) with said pressurized gas;
characterised in that said seal (50) is distorted by temporarily squeezing said seal externally of the damper.

12. A method as claimed in claim 11, further comprising the additional steps of:
securing a gas delivery chamber (78) about said housing (12) at a position adjacent to said piston rod (14) and said seal (50);
sealing said gas delivery chamber (78) with respect to said housing (12) and said piston rod (14); and
delivering pressurized gas to said gas delivery chamber (78).

13. A method as claimed in claim 11 or claim 12, wherein said step of temporarily squeezing said seal (50) is operable to form a plurality of first flow passages (96).

14. A method as claimed in any one of claims 11 to 13, wherein said damper (10) also includes a valve member (72), said method further comprising the additional step of opening said valve member (72) in response to the delivery of pressurized gas to said damper (10) through said at least one first flow passage (96) so as to form a second flow passage (74).

15. A method as claimed in any one of claims 11 to 14, further comprising the additional step of removing said temporary squeeze from said seal (50) when the pressure of said gas within the damper (10) has reached a predetermined level.

16. The method of claim 15 when appendant to claim 12, further comprising the step of removing said gas delivery chamber (78) from said housing (12) when the pressure of said gas has reached a predetermined level.

## Patentansprüche

1. Vorrichtung zum Füllen eines Dämpfers (10) mit unter Druck stehendem Gas, wobei der Dämpfer ein Gehäuse (12), eine sich von diesem Gehäuse erstreckende Stange (14) und eine zwischen dem Gehäuse und der Stange angeordnete Dichtung (50) umfaßt und wobei die Vorrichtung folgendes umfaßt:
- Mittel (86) zum Zusammendrücken der Dichtung (50), um diese so zu verformen, daß sie mindestens eine Durchflußöffnung (96) bildet, damit das unter Druck stehende Gas zwischen der Dichtung und der Stange fließen kann, und
Mittel (76) zum Zuführen des unter Druck stehenden Gases zu mindestens einer Durchflußöffnung (96).

2. Vorrichtung nach Anspruch 1, dadurch gekennzeichnet, daß das Mittel (86) zum Zusammendrücken der Dichtung (50) so angebracht ist, daß es eine Mehrzahl von Durchflußöffnungen (96) bildet, damit das unter Druck stehende Gas zwischen der Dichtung (50) und der Stange (14) fließen kann.

3. Vorrichtung nach Anspruch 1 oder Anspruch 2, dadurch gekennzeichnet, daß das Mittel (76) zum Zuführen des unter Druck stehenden Gases zu mindestens einer Durchflußöffnung (96) betätigt werden kann, um einen Bereich des Dämpfers (10) in der Nähe der Dichtung abdichtend zu greifen.

4. Vorrichtung nach einem der vorstehenden Ansprüche, dadurch gekennzeichnet, daß das Mittel (86) zum Zusammendrücken der Dichtung (50) in dem Mittel (76) zum Zuführen des unter Druck stehenden Gases zu der Durchflußöffnung (96) angeordnet ist.

5. Vorrichtung nach einem der vorstehenden Ansprüche, dadurch gekennzeichnet, daß das Mittel (86) zum Zusammendrücken der Dichtung (50) betätigt werden kann, um einen Bereich der Dichtung so zusammenzudrücken, daß diese mindestens eine Durchflußöffnung (96) ausbildet.

6. Vorrichtung nach einem der vorstehenden Ansprüche, dadurch gekennzeichnet, daß das Mittel (86) zum Zusammendrücken der Dichtung folgendes umfaßt:
- ein erstes Element (88), das betätigbar ist, um einen Teil der Dichtung (50) zu greifen, und
- ein zweites Element (90), das betätigbar ist, um einen Teil der Dichtung (50) zu greifen,
wobei das erste und zweite Element (88, 90) zueinander bewegbar sind, um mindestens eine Durchflußöffnung (96) auszubilden.

7. Vorrichtung nach einem der vorstehenden Ansprüche, dadurch gekennzeichnet, daß die Dichtung (50) bei normalem Einsatz des Dämpfers betätigbar ist, um das unter Druck stehende Gas in dem Gehäuse (12) zu halten.

8. Vorrichtung zum Füllen eines Dämpfers (10) mit unter Druck stehendem Gas, wobei der Dämpfer ein Gehäuse (12) und eine sich von dem Gehäuse erstreckende Kolbenstange (14) umfaßt und wobei die Kolbenstange gegenüber dem Gehäuse durch eine Dichtung (50) abgedichtet ist, wobei die Vorrichtung folgendes umfaßt:
- einen Gasabgaberaum (78), der mit dem Gehäuse (12) des Dämpfers (10) neben der Kolbenstange (14) abdichtend greift;
dadurch gekennzeichnet, daß die Vorrichtung weiterhin umfaßt:
- eine Verformungsklemme (86) zur äußeren Anbringung an dem Dämpfer (10), um die Dichtung (50) zusammenzudrücken und dadurch zeitweilig zu verformen, so daß unter Druck stehendes Gas durch die in der Dichtung gebildete zeitweilige Verformung (86) in den Dämpfer eindringen kann.

9. Vorrichtung nach Anspruch 8, dadurch gekennzeichnet, daß die Verformungsklemme erste und zweite Elemente (88, 90) umfaßte die um die Dichtung (50) anordenbar sind, wobei die ersten und zweite Elemente zueinander beweglich sind, um einen Teil der Dichtung zusammenzudrücken, damit die zeitweilige Verformung (96) ausgebildet werden kann.

10. Vorrichtung nach Anspruch 8 oder Anspruch 9, dadurch gekennzeichnet, daß die Verformungsklemme (86) in dem Gasabgaberaum (78) angeordnet ist.

11. Verfahren zum Füllen eines Dämpfers (10) mit unter Druck stehendem Gas, wobei der Dämpfer ein Gehäuse (12), eine sich von dem Gehäuse erstreckende Kolbenstange (14) und eine zwischen dem Gehäuse und der Stange angeordnete Dichtung (50) umfaßt, und wobei das Verfahren folgendes umfaßt:
- Verformen der Dichtung (50), um mindestens eine erste Durchflußöffnung (96) auszubilden, und
- Zuführen von unter Druck stehendem Gas zu mindestens einer ersten Durchflußöffnung (96), um dadurch den Dämpfer (10) mit unter Druck stehendem Gas zu füllen;
dadurch gekennzeichnet, daß die Dichtung (50) durch das zeitweilige Zusammendrücken der Dichtung außerhalb des Dämpfers verformt wird.

12. Verfahren nach Anspruch 11, das weiterhin die folgenden Schritte umfaßt:
- Anbringen eines Gasabgaberaums (78) um das Gehäuse (12) in einer Position neben der Kolbenstange (14) und der Dichtung (50);
- Abdichten des Gasabgaberaums (78) gegenüber dem Gehäuse (12) und der Kolbenstange (14) und
- Zuführen von unter Druck stehendem Gas zu dem Gasabgaberaum (78).

13. Verfahren nach Anspruch 11 oder Anspruch 12, dadurch gekennzeichnet, daß der Schritt des zeitweiligen Zusammendrückens der Dichtung (50) durchführbar ist, um eine Mehrzahl erster Durchflußöffnungen (96) auszubilden.

14. Verfahren nach einem der Ansprüche 11 bis 13, dadurch gekennzeichnet, daß der Dämpfer (10) weiterhin ein Ventilelement (72) umfaßt, wobei das Verfahren weiterhin den zusätzlichen Schritt der Öffnung des Ventilelements (72) in Reaktion auf die Zuführ des unter Druck stehenden Gases zu dem Dämpfer (10) durch mindestens eine erste Durchflußöffnung (96) umfaßt, um so eine zweite Durchflußöffnung (74) auszubilden.

15. Verfahren nach einem der vorstehenden Ansprüche 11 bis 14, das weiterhin den zusätzlichen Schritt der Rücknahme des zeitweiligen Zusammendrückens der Dichtung (50) umfaßt, sobald der Druck des Gases in dem Dämpfer (10) ein vorbestimmtes Maß erreicht.

16. Verfahren nach Anspruch 15, wenn dieses Anspruch 12 beigefügt wird, welches weiterhin den Schritt der Entfernung des Gasabgaberaums (78) von dem Gehäuse (12) umfaßt, wenn der Druck des Gases ein vorbestimmtes Maß erreicht.

## Revendications

1. Dispositif pour charger un amortisseur (10) en gaz comprimé, ledit amortisseur comprenant un boîtier (12), une tige (14) s'étendant à partir dudit boîtier et un joint d'étanchéité (50) disposé entre ledit boîtier et ladite tige, ledit dispositif comprenant :
des moyens (86) pour pincer ledit joint d'étanchéité (50) de façon à le distordre afin de former au moins un passage d'écoulement (96) pour ledit gaz comprimé pour qu'il s'écoule entre ledit joint d'étanchéité et ladite tige ; et
des moyens (76) pour délivrer ledit gaz comprimé audit ou auxdits passages d'écoulement (96).

2. Dispositif selon la revendication 1, dans lequel lesdits moyens (86) pour pincer ledit joint d'étanchéité (50) sont disposés de façon à former une pluralité desdits passages d'écoulement (96) pour ledit gaz comprimé pour qu'il s'écoule entre ledit joint d'étanchéité (50) et ladite tige (14).

3. Dispositif selon la revendication 1 ou la revendication 2, dans lequel lesdits moyens (76) pour délivrer du gaz comprimé audit ou auxdits passages d'écoulement (96) peuvent fonctionner de façon à venir en prise de façon étanche avec une région dudit amortisseur (10) proche dudit joint d'étanchéité.

4. Dispositif selon l'une quelconque des revendications précédentes, dans lequel lesdits moyens (86) pour pincer ledit joint d'étanchéité (50) sont disposés à l'intérieur desdits moyens (76) pour délivrer du gaz comprimé audit passage d'écoulement (96).

5. Dispositif selon l'une quelconque des revendications précédentes, dans lequel lesdits moyens (86) pour pincer ledit joint d'étanchéité (50) peuvent fonctionner de façon à comprimer une région dudit joint d'étanchéité afin de former le ou lesdits passages d'écoulement (96).

6. Dispositif selon l'une quelconque des revendications précédentes, dans lequel lesdits moyens (86) pour pincer ledit joint d'étanchéité comprennent :
un premier élément (88) pouvant fonctionner de façon à venir en prise avec une partie dudit joint d'étanchéité (50) ; et
un deuxième élément (90) pouvant fonctionner de façon à venir en prise avec une partie dudit joint d'étanchéité (50),
lesdits premier et deuxième éléments (88, 90) étant mobiles l'un par rapport à l'autre de façon à former le ou lesdits passages d'écoulement (96).

7. Dispositif selon l'une quelconque des revendications précédentes, dans lequel ledit joint d'étanchéité (50) peut, lors de l'utilisation normale de l'amortisseur, fonctionner de façon à maintenir le gaz comprimé à l'intérieur dudit boîtier (12).

8. Dispositif pour charger un amortisseur (10) en gaz comprimé, ledit amortisseur comportant un boîtier (12) et une tige de piston (14) s'étendant à partir dudit boîtier, ladite tige de piston étant étanchement scellée par rapport au boîtier par un joint d'étanchéité (50), ledit dispositif comprenant :
une chambre de délivrance de gaz (78) pouvant venir en prise étanchement avec ledit boîtier (12) dudit amortisseur (10) au voisinage de la tige de piston (14) ;
caractérisé en ce que ledit dispositif comprend de plus :
une pince de distorsion (86) pour l'application externe audit amortisseur (10) pour pincer et par conséquent distordre temporairement ledit joint d'étanchéité (50) afin de permettre au gaz comprimé d'entrer dans ledit amortisseur à travers la distorsion temporaire (96) formée dans ledit joint d'étanchéité.

9. Dispositif selon la revendication 8, dans lequel ladite pince de distorsion comprend des premier et deuxième éléments (88, 90) pouvant être disposés autour dudit joint d'étanchéité (50), lesdits premier et deuxième éléments étant mobiles l'un par rapport à l'autre afin de comprimer une partie dudit joint d'étanchéité afin de former ladite distorsion temporaire (96).

10. Dispositif selon la revendication 8 ou la revendication 9, dans lequel ladite pince de distorsion (86) est disposée à l'intérieur de ladite chambre de délivrance de gaz (78).

11. Procédé pour charger un amortisseur (10) en gaz comprimé, ledit amortisseur comprenant un boîtier (12), une tige de piston (14) s'étendant à partir dudit boîtier et un joint d'étanchéité (50) disposé entre le boîtier et la tige, ledit procédé comprenant :
la distorsion dudit joint d'étanchéité (50) afin de former au moins un premier passage d'écoulement (96) ; et
la délivrance du gaz comprimé audit ou auxdits premiers passages d'écoulement (96) afin de charger par conséquent ledit amortisseur (10) avec ledit gaz comprimé ;
caractérisé en ce que ledit joint d'étanchéité (50) est distordu en pinçant temporairement ledit joint d'étanchéité à l'extérieur de l'amortisseur.

12. Procédé selon la revendication 11, comprenant de plus les étapes additionnelles suivantes :
la fixation d'une chambre de délivrance de gaz (78) autour dudit boîtier (12) dans une position adjacente à ladite tige de piston (14) et audit joint d'étanchéité (50) ;
le scellement étanche de ladite chambre de délivrance de gaz (78) par rapport audit boîtier (12) et à ladite tige de piston (14) ; et
la délivrance de gaz comprimé à ladite chambre de délivrance de gaz (78).

13. Procédé selon la revendication 11 ou la revendication 12, dans lequel ladite étape de pincement temporaire dudit joint d'étanchéité (50) peut se faire de façon à former une pluralité de premiers passages d'écoulement (96).

14. Procédé selon l'une quelconque des revendications 11 à 13, dans lequel ledit amortisseur (10) comprend également un élément formant vanne (72), ledit procédé comprenant de plus l'étape additionnelle d'ouverture dudit élément formant vanne (72) en réponse à la délivrance du gaz comprimé audit amortisseur (10) à travers le ou lesdits premiers passages d'écoulement un (96) de façon à former un deuxième passage d'écoulement (74).

15. Procédé selon l'une quelconque des revendications 11 à 14, comprenant de plus l'étape additionnelle de retrait dudit pincement temporaire depuis ledit joint d'étanchéité (50) lorsque la pression dudit gaz à l'intérieur de l'amortisseur (10) a atteint un niveau prédéterminé.

16. Procédé selon la revendication 15, lorsqu'elle dépend de la revendication 12, comprenant de plus l'étape de retrait de ladite chambre de délivrance de gaz (78) depuis ledit boîtier (12) lorsque la pression dudit gaz a atteint un niveau prédéterminé.
